# EUROPEAN PATENT SPECIFICATION

(11) **EP 3 321 081 B1**
(45) Date of publication and mention of the grant of the patent: **08.01.2020**
(21) Application number: 16386014.1
(22) Date of filing: 01.08.2016
(51) Int. Cl.: B32B 5/24, B32B 5/02, B09B 1/00, B32B 5/16, B32B 19/06, D04H 5/00, E02D 3/00, E02D 31/00, E02B 3/12

(54) **GEOSYNTHETIC REACTIVE CLAY (GRC) HAVING AN ATTAPULGITE CLAY CORE FOR THE CAPPING OR CONTAINMENT OF CONTAMINATED SOIL**
GEOSYNTHETISCHER, REAKTIVER TON MIT EINEM ATTAPULGITH-TONKERN ZUM ABDECKEN UND EINSCHLIESSEN VON KONTAMINIERTEM BODENMATERIAL
ARGILE RÉACTIVE GÉOSYNTHÉTIQUE AYANT UN NOYAU D'ARGILE ATTAPULGITE POUR LE RECOUVREMENT OU CONTAINEMENT DE SOL CONTAMINÉ

(30) Priority: 25.08.2015 GR 20150100372
(43) Date of publication of application: 16.05.2018
(73) Proprietor: Thrace Nonwovens & Geosynthetics S.A., 67100 Magiko Xanthis (GR)
(72) Inventor: KOLLIOS, Anastasios, 19013 Anavyssos (GR); ZOTIADIS, Vasileios, 18534 Pireas (GR)

(56) References cited:
- WO-A2-2008/134604
- Unknown: "Mesh (scale)", Wikipedia , XP002779738, Retrieved from the Internet: URL:https://en.wikipedia.org/wiki/Mesh_(sc ale) [retrieved on 2018-04-03]

## Description

### TECHNICAL FIELD OF THE INVENTION

The present invention relates to a new type of geocomposite as a commercial product for environmental applications. The new geocomposite comprises a core consisting of a granular, permeable, thermally modified attapulgite clay as contaminant-adsorptive active material, sandwiched between a lower woven geotextile and an upper non-woven geotextile. The new geocomposite exhibits a hydraulic active-filter function, i.e. it allows passage of water and at the same time it functions as a geochemical barrier by adsorbing a wide range of contaminants. The field of applications of the geocomposite regards capping and/or containment of contaminated soil. The application method comprises positioning of the new geocomposite on and/or around the contaminated soil. In capping works, a layer of vegetal soil is applied on the new geocomposite at a thickness depending on the requirements of the architectural-landscape planning project for space renovation.

### STATE OF THE ART

The management of contaminated soil characterized by high levels of contaminants, where the application of other remediation techniques (in situ or ex situ) is not possible from a technical-financial point of view, is performed by applying techniques which are referred to either as capping or as ex-situ excavation.

Capping as a remediation technique may include partial or zero sanitation of the contaminated soil and covering with natural materials (earthy or concrete), geosynthetic materials (e.g. geomembrane, geosynthetic barrier of the GCL type), or a combination thereof.

In this regard, examples of respective geocomposites of the Reactive Mats type for the capping or containment of contaminated soil are described in various patents [e.g. U.S. Patents No. 6,284,681 B1 ('681), US2002/0151241 A1 ('241), U.S. Pat No. 2007/0227981 A1 ('981), U.S. Pat. No. 7,575,682 B2 ('682), U.S. Pat. No. 7,854,330 B2 ('330), U.S. Pat. No. 8,042,696 B2 ('696), WO 2008/134604 A2].

The specific geocomposites consist of one or more layers of an active material (active carbon, zeolites, resins, apatite, organophilic or non-organophilic bentonite, Fe⁰, etc., or mixtures thereof), sandwiched in geotextiles, which hydraulically allow passage of the liquids through them while the contaminants are adsorbed or react with the sandwiched active material between the geotextiles. The said geocomposites are respectively used as active filters for contaminants in soil and water.

The efficiency of the reactive-mats geocomposites is associated with the long-term maintenance of their hydraulic and geochemical function as "active filters". Therefore, the intrinsic problem of the materials currently used in various capping applications is that after some time they present "ageing" signs in their adsorption capacity, and thus they must be replaced (saturation states and a significant reduction in their adsorption capacity).

The new geocomposite material of the present patent application achieves the desired long-term hydraulic filter behavior both by the use of granular, thermally modified attapulgite clay and by the geotextiles which confine it. The advantages of the new geocomposite in relation to the respective existing commercial products of the Reactive Mats type are derived from the addition of the thermally modified attapulgite clay as active material. Attapulgite (or palygorskite) belongs to the class of the special clays and constitutes a phyllosilicate mineral (2:1), that presents an intermediate dioctahedral and trioctahedral structure with general formula: Mg₅Si₈O₂₀(OH)₂(OH₂)₄^{∗}4H₂O (Galàn, E. and Singer, A., 2011). Its structure is characterized by the presence of micropores and free channels, which provide it with a high specific surface area and excellent sorption properties, which remain functional beyond the time limit of the planning of corresponding products.

The new geocomposite includes a thermally modified attapulgite clay (Regular Volatile Matter, Low Volatile Matter or combinations thereof) as contaminant-adsorptive material. During heating, attapulgite (palygorskite) clay is progressively dehydrated with increase in temperature. More specific, heating attapulgite (Regular Volatile Matter) clay at relatively low temperatures (up to 130°C) removes selectively water adsorbed on external surfaces and the zeolitic water from the nanoporous tunnels of the mineral, while leaving the structural water and the Mg-OH groups unaffected. The elimination of coordinated, structural water starts when the zeolitic water is lost and ends when dehydroxylation begins. The desired structural folding of the attapulgite clay (Low Volatile Matter) occurs when some structural water has been removed, which allows the terminal Mg(II) to complete its coordination with th oxygen of the neighboring silica surface. The treatment temperature of Low Volatile Matter attapulgite clay does not exceed 350°C.

The thermally (Regular Volatile Matter or Low Volatile Matter) modified attapulgite clay layer used in the new geocomposite product is an advanced material, presenting special and different properties and applications than a typical, non thermally modified (High Volatile Matter) attapulgite clay. The thermally modified (RVM, LVM) attapulgite clay presents high oleophilic and hydrophilic properties while on the contrary, unmodified (HVM) attapulgite present low oleophilic and hydrophobic properties. Additionally the thermal modification of the attapulgite clay increases its sorption properties for a wide range of polar and non-polar compounds (i.e. organic and inorganic compounds, dyes) and is a superior adsorptive material in comparison with a typical, unmodified, attapulgite clay. In addition to the above, the thermally modified attapulgite clay as core for the new geocomposite is more lightweight, providing the advantage that the final geocomposite product will exhibit a significantly lower weight compared to other Reactive-Mats products of the same dimensions.

Regarding the Geosynthetic Clay Liners (GLC) currently employed, which are described in U.S. Patent No. 5,237,945 ('945), and U.S. Patent No. 5,389,166 ('166), it should be noted that their application in capping works generates full impermeability (blocking both downwards migration of rain water and evaporation of the underlying moisture) not allowing the desired filter function, which is required for the adsorption of the upwards migrating dissolved contaminants during evaporation of the natural moisture. On the contrary, the use of the permeable, thermally modified, attapulgite clay in the core of the new geocomposite (in respect to the impermeable bentonite of the core of a Geosynthetic Clay Liner) ensures unobstructed flow (filter function) and thus the required adsorption-retention of the underlying contaminants in the structure of the thermally modified attapulgite clay during evaporation. In conclusion, the prior-art patents describing hydraulic barriers cannot be used in the field of applications of the new geocomposite, where drainage of the water (meteoric or irrigation) of the vegetal soil by downwards migration through the geocomposite to the underlying soil is necessary.

The main field of applications of the new geocomposite regards capping of contaminated soil, where the architectural space renovation planning provides for beds or free planting spaces by positioning non-contaminated vegetal soil at a suitable thickness. The new geocomposite product, which is made up of a granular, hydraulically permeable, thermally modified attapulgite clay as contaminant-adsorptive active material, sandwiched between a flower woven and an upper non-woven geotextile presents a hydraulic "active" filter function, i.e. it allows passage of water while it functions as a geochemical barrier for a wide range of inorganic and organic contaminants. The proposed application of the new geocomposite product in capping works includes partial or zero remediation of the contaminated soil, layering of the new geocomposite on the contaminated soil and placement of vegetal soil thereon. Respectively, in applications of containment-confinement of the contaminated soil zone, in which the contaminated soil zone is fully enclosed, the advantage of the new geocomposite product is that it keeps the function of an "active" filter over the planned duration of the work, thus it is not necessary to replace it, which would be expensive (cost-effective solution).

In conclusion it is noted that the new proposed Geosynthetic Reactive Clay (GRC) product avoids the disadvantages of the known active filter geocomposites due to the properties of the thermally modified attapulgite clay. Thermally modified attapulgite clay is a lightweight clay with a high specific surface area and a high contaminant adsorption capacity for a wide range of contaminants, which, although being a clay mineral, achieves at a specific particle size gradation a hydraulic active-filter function. The thermally modified attapulgite clay is advantageous, compared to other natural minerals (e.g. zeolite) or other Na-bentonite/Na-smectite clays which are currently used, due to the combination of all the parameters desired for the function of the active filter in the new geocomposite product, such as a low apparent weight, a high specific surface area (>220 m²/g), a high sorption capacity and a desired hydraulic behavior.

### BRIEF DESCRIPTION OF THE INVENTION

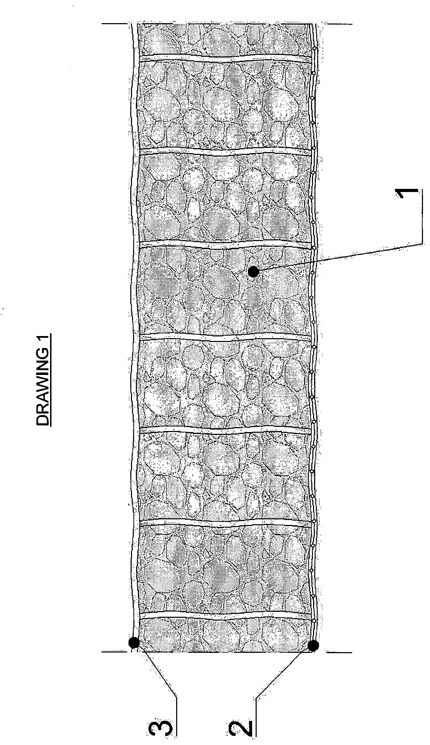

In the following drawing 1, the view of the new Geosynthetic Reactive Clay product is presented. According to this drawing, the new geocomposite product has a thickness of 8-12 mm and consists of a core of thermally modified attapulgite clay (Drawing 1, note 1), as active material, sandwiched between a lower woven (Drawing 1, note 2) and an upper non-woven geotextile (Drawing 1, note 3) and presents a hydraulic active-filter function, i.e. it allows the unobstructed passage of water while it geochemically functions as a barrier for a wide range of soluble contaminants.

The particular structural components of the new geocomposite product comprise:
1) The core of the geocomposite, which consists of the clay minerals attapulgite, attapulgite/saponite, thermally modified (Regular Volatile Matter or Low Volatile Matter or combinations thereof). The active material of the core consists of a granular, thermally modified attapulgite clay which presents a hydraulic "active"-filter function, i.e. it allows the unobstructed passage of water while it geochemically functions as a barrier for a wide range of soluble contaminants.
2) The surrounding lower woven / upper non-woven geotextiles:
   - Upper non-woven geotextile - with mechanical properties which provide tensile strength from 6 to 43 kN/m, puncture strength (CBR) from 0.86 to 7.4 kN, hydraulic properties with water flow rate on a flat surface from 35 to 144 liters per second, and a mesh size of the perforated surface from 90 to 128 µm.
   - Lower woven geotextile - high-strength woven geotextile made of 100% polypropylene yarns, UV resistant, with mechanical properties providing tensile strength from 14 to 105 kN/m, and puncture strength (CBR) from 2 to 12 kN.

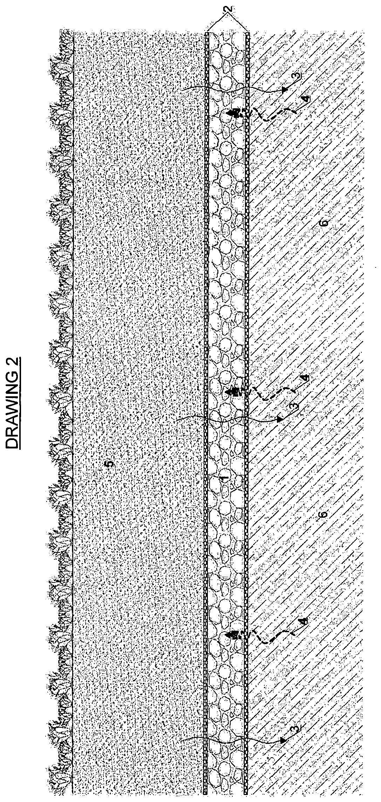

The hydraulic filter behavior of the geocomposite (Drawing 2) is ensured by the combination of the use of granular, thermally modified, attapulgite clay (Drawing 2, element 1) with the geotextiles (Drawing 2, element 2) confining it in the new geocomposite product. The thermally modified attapulgite clay as active material in the new geocomposite allows unobstructed passage of water (Drawing 2, element 3), while due to its excellent adsorption properties, it retains the water-soluble contaminants (e.g. heavy metals), which during evaporation of the natural moisture may migrate upwards under capillary action (Drawing 2, element 4) from the underlying contaminated soil (Drawing 2, element 6) to the overlying vegetal soil (Drawing 2, element 5) during evaporation, preventing contamination of the covering vegetal soil (Drawing 2, element 5). At the same time, the two geotextiles confining the thermally modified attapulgite clay contribute in the mechanical separation of the contaminated soil from the covering vegetal soil, and ensure stability/homogeneity of the distribution of the thermally modified attapulgite clay during production of the new product.

Attapulgite (palygorskite), although being a clay mineral characterized by a low ion-exchange capacity (CEC), presents a high adsorption/sorption capacity for heavy metals due to its special structure according to the literature (Fan, Q. et al., 2009, Shirvani et al., 2006). The sorption capacity of attapulgite clay to the inorganic and especially to the organic compounds is significantly improved by thermally treating (reducing its hydrophilicity and increasing its lipophilicity), while additionally activated carbon may be also used at a ratio of up to 5%, in order to bind specific organic contaminants such as aromatic hydrocarbons (PAHs).

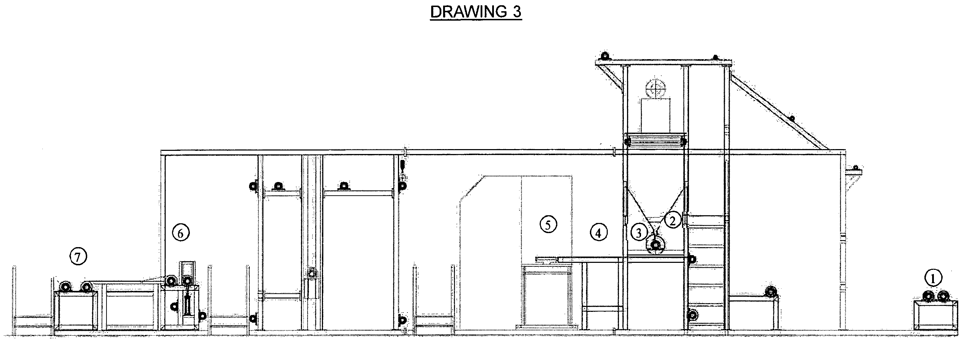

The production method of the new geocomposite product includes the following steps, as shown in Drawing 3. Thermally modified attapulgite clay is positioned between two layers of geotextiles. As base, the first (lower) woven geotextile (Drawing 3, element 1) is used, on which the thermally modified attapulgite clay is layered (Drawing 3, element 2). Thereafter, water is sprayed (Drawing 3, element 3) for better adhesion of the clay and easier needle-punching of the geosynthetic. Before needle-punching, the second (upper) non-woven geotextile (Drawing 3, element 4) is placed which contains polypropylene fibers having a length larger than 9 mm. During the needling operation, the needles grab the polypropylene fibers from the (upper) nonwoven geotextile and pass them through the thermally modified attapulgite play (Drawing 3, element 5), and the first (lower) woven geotextile and return them back to the (upper) nonwoven geotextile. Thus the clay is retained within the geocomposite. The obtained product is rolled (Drawing 3, element 6), weighed and placed in a protective sheath (Drawing 3, element 7).

## Claims

1. Geosynthetic Reactive Clay (GRC) product for capping/containment of contaminated soil, having a thickness of 8-12 mm, **characterized in that** it is made up of a thermally modified attapulgite-clay core, which consists of a granular, hydraulically permeable, attapulgite clay or attapulgite/saponite clay, thermally modified as main active material, sandwiched between a lower woven and an upper non-woven geotextile and presents a hydraulic "active"-filter function, i.e. it allows unobstructed passage of water while it geochemically functions as a barrier for a wide range of soluble contaminants, wherein the main active material has particle sizes between 1.19 mm - 0.250 mm.

2. Geosynthetic Reactive Clay (GRC) product for capping/containment of contaminated soil, according to claim 1, **characterized in that** the core of the geocomposite consists of the clay minerals attapulgite, attapulgite/saponite which are thermally modified (Regular Volatile Matter or Low Volatile Matter or combinations thereof).

## Patentansprüche

1. Geosynthetisches, reaktives Ton (GRT) Produkt für Abdeckung/Einschließung von kontaminiertem Boden, das eine Schichtdicke von 8-12 mm aufweist, **dadurch gekennzeichnet daß** es von einem thermisch modifizierten Attapulgittonkern gebildet ist, der aus einem körnigen, hydraulisch permeabelen, thermisch modifiziertem Attapulgitton oder Attapulgit/Saponit Ton besteht, als wirksames Hauptstoff, das zwischen einem unteren gewebten Geotextil und einem oberen Vliessgeotextil angeordnet ist, und eine hydraulische "Aktivfilter" Function aufweist, daß heißt es eine unbehinderte Durchfluss von Wasser ermöglicht, wobei es geochemisch als eine Sperre für eine Vielfalt von löslichen Kontaminanten wirkt, wobei das wirksame Hauptstoff eine Partikelgröße zwischen 1.19 mm - 0.250 mm aufweist.

2. Geosynthetisches, reaktives Ton (GRT) Produkt für Abdeckung/Einschließung von kontaminiertem Boden gemäß Anspruch 1, **dadurch gekennzeichnet daß** der Kern des Geocomposites aus den Tonmineralen Attapulgit, Attapulgit/Saponit besteht, die thermisch modifiziert sind (Regular Volatile Matter oder Low Volatile Matter oder Kombinationen davon).

## Revendications

1. Produit en argile géosynthétique réactif (GRC) pour recouvrir / confiner les sols contaminés, d'une épaisseur de 8 à 12 mm, **caractérisé en ce qu'**il est constitué d'un noyau thermiquement modifié d'attapulgite-argile, constitué d'un noyau granulaire perméable hydrauliquement, argile attapulgite ou argile attapulgite / saponite, modifiée thermiquement comme matériau actif principal, intercalée entre un géotextile tissé et un géotextile supérieur tissé et présentant une fonction de remplissage «actif» hydraulique, c'est-à-dire qu'elle permet le passage libre de l'eau tout en assurant la fonction géochimique en tant que barrière pour une large gamme de contaminants solubles, la matière active principale ayant des tailles de particules comprises entre 1,19 mm et 0,250 mm.

2. Produit d'argile géosynthétique réactif (GRC) pour le recouvrement / le confinement de sols contaminés, selon la revendication 1, **caractérisé en ce que** le noyau du géocomposite est constitué de l'attapulgite, de l'attapulgite / saponite, minéraux argileux, modifiés thermiquement (Matière volatile régulière ou à faible teneur en matière volatile ou leurs combinaisons).
